# EUROPEAN PATENT APPLICATION

(11) **EP 2 666 753 A2**
(43) Date of publication of application: **27.11.2013**
(21) Application number: 12189505.6
(22) Date of filing: 23.10.2012
(51) Int. Cl.: C01F 11/18

(54) **A method for preparing barium carbonate and the product obtained by the method**

(30) Priority: 21.05.2012 CN 201210159096
(71) Applicant: Guizhou Redstar Developing Co., Ltd., Guizhou 561206 (CN); Shenzhen Haoyitong Investment And Development Co., Ltd., Guangdong 518000 (CN)
(72) Inventor: Jiang, Zhiguang, Anshun City Guizhou 561206 (CN); Hua, Dong, Longshui Town, Dazu County Chongqing 402368 (CN); Wu, Fei, Tongren,Guizhou 554001 (CN)
(74) Representative: Rambelli, Paolo

(57) **Abstract**

The present invention relates to a method for preparing barium carbonate and the barium carbonate product obtained by the method. The method for preparing barium carbonate comprises: (1) Adding barium hydroxide octahydrate crystal into the ice-water bath and mixing them, and controlling the temperature to be within 0∼5°C; (2) Introducing carbon dioxide into the mixture obtained from the step (1), till pH value of the reaction solution reaches 6.0-7.0; (3) Carrying out solid-liquid separation for the solid-liquid mixture obtained from the step (2), drying the obtained solid so as to obtain barium carbonate product. The present invention method solves the problem in the prior art that the character of low strontium and the character of large specific surface area cannot co-exist, which makes the property of barium carbonate product can not affect the sintering temperature, and thus the property material is improved.

## Description

### Technical field

The present invention relates to a method for preparing barium carbonate and the barium carbonate product obtained by the method.

### Background Art

High-purity barium carbonate is mainly used for preparing main crystalline phase material of electronic sensitive ceramics such as titanate, zirconate, stannate with solid-phase synthesis. However, in recent years, with the development of infocommunications industry, higher requirements for high-purity barium carbonate with specific surface area is put forward in electronic component industry such as laminated electric capacity industry, double function of capacitance and inductance component industry, and in barium titanate super capacitor industry. In the meantime, more strict attention is paid to the content of strontium impurity which affects the sintering temperature.

Barium carbonate with large specific surface area is generally synthesized with the liquid phase method, crystal grain growth inhibitor is usually added, or the reaction is carried out in rotating packed bed, or the reaction is carried out in alcohol and salt system. However, there exist the following problems in all the forgoing methods: repetitiveness is bad, impurities are introduced and have large effect on the product and the difficulty of washing is large.

Strontium hydroxide and barium hydroxide are main materials for preparing strontium carbonate and barium carbonate with large specific surface area. Preparing strontium carbonate with the specific surface area over 10m²/g is quite easy, because of the effect of Sr²⁺, accordingly, the method for preparing barium carbonate with large specific surface area from Ba(OH)₂·8H₂O which contains higher content strontium is easier. However, the method for preparing high purity barium carbonate with low strontium and large specific surface area has not been studied.

For these reasons, there is realistic significance to find a method for preparing high purity barium carbonate with large specific surface area, which possesses advantages that impurities are not introduced, repetitiveness is well, and controllability of the process is high.

### Summary of the invention

In order to obtain high purity barium carbonate with large specific surface area and low strontium content, inventors think of that the reaction of carbon dioxide with barium hydroxide may be carried out in the system only with pure water.

The inventors design the following experiments in order to research the effect of different barium hydroxide materials with different strontium content, on the high purity barium carbonate product with large specific surface area:
450 g of Ba(OH)₂·8H₂O with different strontium content are respectively added to 4000ml deionized water at 25°C. The mixture is stirred for 5 minutes and then the gas of CO₂ is introduced with flow rate of 300ml/min, the reaction continues until pH of the mixture reaches 6.5~7.0, and then solid and liquid is separated, the solid is vacuum dried at 60°C for 24 hours, and samples 1^{#} and 2^{#} are obtained.

| Items | 1^{#} | 2^{#} |
|---|---|---|
| Sr ppm | 2720 | 17.1 |
| BET m²/g | 5.12 | 1.87 |
| H₂O % | 0.17 | 0.08 |

From foregoing experiment research, the inventors find that the characteristic of high purity with low strontium content and the characteristic of large specific surface area are a pare of contradictions. Therefore, after researching combining with reaction principles, the inventors find that in order to prepare barium carbonate with large specific surface area, growing character of strontium orthorhombic system should be used to obtain the product with large specific surface area, i.e., reducing nucleation rate, keeping oriented growth, and obtaining needle crystal finally.

It could be obtained from the research, because solubility of Sr(OH)₂· 8H₂O is much lower than solubility of Ba(OH)₂·8H₂O and degree of supersaturation is low, which are in favor of growing of crystal, so preparing SrCO₃ with specific surface area higher than 10m²/g is quite easy. Because of the function of Sr²⁺, preparing BaCO₃ with large specific surface area by utilizing Ba(OH)₂·8H₂O with higher strontium content are much easier. However, strontium element affects sintering temperature of ceramic material and thus affects the characteristics of ceramic material. Therefore, as for preparing barium carbonate with large specific surface area, strontium element is indispensable, but strontium content should be controlled as far as possible because of needs of product properties.

The inventors inventively think that effect of strontium content on the specific surface area can be replaced by controlling the reaction temperature of barium hydroxide and carbon dioxide and the best result is obtained.

The present invention for preparing high purity barium carbonate with low strontium content and large specific surface area is realized by reacting with carbon dioxide in pure water system at the controlled temperature.

The present invention mainly relates to the following chemical reactions:

Ba(OH)₂ +CO₂↑→BaCO₃+H₂O

The present invention relates to a method for preparing barium carbonate, which is characterized in that comprising following steps:
(1) Dissolving barium hydroxide
   Barium hydroxide octahydrate crystal is added to the ice-water bath and mixed, and the temperature is controlled within 0~5°C, preferably 4~5°C.
(2) Reacting barium hydroxide with carbon dioxide
   Carbon dioxide is introduced into the mixture obtained from the step (1), till pH value of the reaction solution is 6.0-7.0, preferably 6.5-7.0.
(3) Treatment of product
   The solid-liquid mixture obtained from the step (2) is treated with solid-liquid separation, the obtained solid is dried and barium carbonate product is obtained.

Preferably, purity of barium hydroxide octahydrate in said step (1) is greater than 98wt%, strontium content is less than 10ppm by weight.

Preferably, mixing proportion of barium hydroxide octahydrate to water in said step (1) is 80-250g/lL water.

Preferably, flow rate of CO₂ gas in said step (2) is within the range of 250-300ml/min, preferably 270-300ml/min.

Preferably, the reaction is carried out by using bubbling absorption device in said step (2).

Preferably, said step (1) also includes the operation of stirring the mixture for 3-10 min, preferably 5 min.

Preferably, drying operation in said step (3) is carried out at 60-105°C for 12-24h.

The present invention also relates to barium carbonate product produced by the forgoing method.

Preferably, the specific surface area of the barium carbonate product is greater than 10m²/g, strontium content is lower than 20.0ppm by weight, and purity of barium carbonate is not lower than 99.50 wt %.

Therefore, the preparing method in the present invention solves the problem in prior art that the character of low strontium with high purity and the character of large specific surface area cannot co-exist, and no new impurities are introduced in the meanwhile, which makes the property of barium carbonate can not affect the sintering temperature, and thus the property and function of ceramic material is improved.

### Brief Description of the Drawings

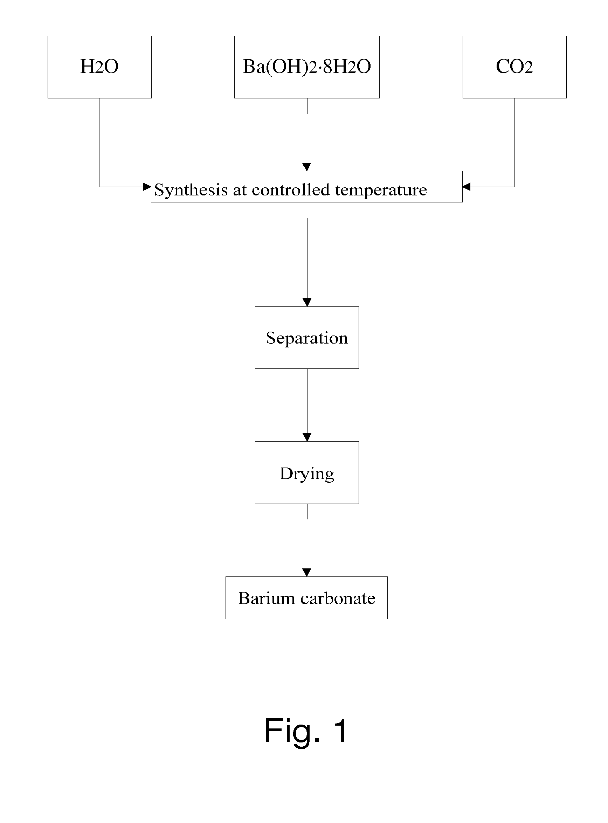

Fig. 1 is main process flow diagram of the present invention.

### Embodiment

Following examples are detailed as follows. However, a person skilled in the art should understand that the protection scope of present invention should not be limited.

Important raw materials or apparatuses are illuminated as follows:
**Barium hydroxide octahydrate**: all the general industrial grade barium hydroxides can be used, only if barium carbonate with low strontium and large specific surface area is expected to obtain, the strontium content is required to be lower than 10ppm by weight, and the purity is required to be greater than 98wt%.

The process flow of the method for preparing high purity barium carbonate product with large specific surface area in the present invention, is particularly explained as follows combining process flow diagram 1:

### (1) Dissolving barium hydroxide

Barium hydroxide octahydrate crystal is added to ice-water bath and mixed, and the temperature of the ice-water bath is controlled within 0~5°C, purpose of which is reducing the solubility of barium hydroxide octahydrate, reducing the concentration of [Ba²⁺] in the system and thus nucleation rate is reduced, diffusion rate of carbon dioxide gas is also reduced in the meanwhile. As a result of the above double outcomes, the degree of supersaturation reduces, which is in favor of growing of thin needle shape crystal of barium carbonate and increasing of BET value. However, when the temperature is lower than 4°C, viscosity of water increases more obviously, so that there is a reducing trend of reaction rate and utilization efficiency of gas. Therefore, the temperature of ice-water bath is preferably 4-5°C.

Preferably, in order to avoid strontium content of barium hydroxide octahydrate crystal affecting the strontium content of the finally obtained barium carbonate product, strontium content of high purity barium hydroxide octahydrate crystal is preferably less than 10ppm by weight and purity is preferably greater than 98wt%.

Preferably, in order to mix barium hydroxide octahydrate with water uniformly, so as to increase the speed of reaction efficiency with carbon dioxide in following steps, the operation of stirring the mixture for 3-10 minutes is also comprised after mixing, preferably 5 min.

If the amount of barium hydroxide octahydrate added to water is little, so that the impurities introduced become less, and barium carbonate product with less impurity and higher purity is obtained. However, too little amount of barium hydroxide octahydrate may make barium carbonate crystal grow insufficiently and BET value of the product be rather low. While if the amount of barium hydroxide octahydrate added to water is large, the impurities introduced to raw material become more, and barium carbonate product with lower purity is obtained, and BET value of the product is rather high. However, if the amount of barium hydroxide octahydrate is too large, there will be circumstances that the mixture is too thick to stir during producing the product. Therefore, preferably barium hydroxide octahydrate is mixed with water according to a certain proportion, and barium hydroxide octahydrate is added by the proportion of 80-250g of barium hydroxide octahydrate per 1L water in practical production.

### (2) Reacting barium hydroxide octahydrate with carbon dioxide

Carbon dioxide is introduced into the mixture obtained from the step (1) till pH value of the reaction mixture is within 6.0-7.0, preferably 6.5-7.0.

The purpose of controlling pH is to ensure the extent of reaction moderate, and thus the specific surface area of product is controlled. When pH value is greater than 7.0, part of barium hydroxide has not reacted yet, which affects the purity of final material and pH value of product. While if carbon dioxide gas is introduced for a long time after the reaction is finished, on the one hand carbon dioxide gas will be wasted, on the other hand aging of barium carbonate will be caused, thus needle crystal will dissolve and grow, and BET value will reduce. Therefore, the pH value is needed to be controlled within 6.0-7.0, preferably 6.5-7.0.

Preferably, in order to improve reaction efficiency, bubbling absorption device is used for introducing CO₂ to react with barium hydroxide octahydrate.

Preferably, flow rate of CO₂ gas of bubbling absorption device is within the range of 250-300ml/min, preferably within the range of 270-300ml/min.

### (3) Treatment for product

The solid-liquid mixture obtained from the step (2) is treated with solid-liquid separation, the solid is dried and high purity barium carbonate product with large specific surface area is obtained.

The operation of drying may be carried out at 60-105°C for 12-24h. However, low temperature of drying is in favor of the increase of specific surface area, when the temperature of drying is low, time of drying may increase accordingly, for example, drying at 105°C may need 12h, but drying at 60°C may need 24h.

Barium carbonate product produced by the forgoing method, the specific surface area of which is greater than 10m²/g, strontium content is lower than 20.0ppm by weight, and barium carbonate purity is not lower than 99.50%.

Equipments and raw materials used in following examples are all routine equipments and reagents in the field, and can be commercially bought.

### Example 1

4000ml deionized water is added to 5000ml beaker, and the mixture is cooled with ice-water bath while stirring and the temperature is controlled as 4°C. 321.4g of high purity Ba(OH)₂·8H₂O crystal (purity is greater than 98wt%, strontium content is lower than 10ppm by weight) to be reacted is added to the mixture, the mixture is stirred for 5 minutes, and then carbon dioxide gas is introduced by bubbling absorption device and the mixture reacts. The flow rate of CO₂ gas is controlled as 250ml/min till pH value of the reaction solution reaches 6.5. Solid-liquid separation is carried out, the obtained filtrate is discarded, the obtained solid is dried in vacuum drying oven at 60°C for 24h, and sample 3^{#} of high purity barium carbonate with low strontium content and large specific surface area is obtained.

### Example 2

4000ml deionized water is added to 5000ml beaker, and the mixture is cooled with ice-water bath while stirring and the temperature is controlled as 5°C. 385.7g of high purity Ba(OH)₂·8H₂O crystal (purity is greater than 98wt%, strontium content is lower than 10ppm by weight) to be reacted is added to the mixture, the mixture is stirred for 5 minutes, and then carbon dioxide gas is introduced by bubbling absorption device and the mixture reacts. The flow rate of CO₂ gas is controlled as 270ml/min till pH value of the reaction solution reaches 6.5, solid-liquid separation is carried out, the obtained filtrate is discarded, the obtained solid is dried in the vacuum drying oven at 60°C for 24h, and sample 4^{#} of high purity barium carbonate with low strontium content and large specific surface area is obtained.

### Example 3

4000ml deionized water is added to 5000ml beaker, and the mixture is cooled with ice-water bath while stirring and the temperature is controlled as 4°C. 450g of high purity Ba(OH)₂·8H₂O crystal (purity is greater than 98wt%, strontium content is lower than 10ppm by weight) to be reacted is added to the mixture, the mixture is stirred for 5 minutes, and then carbon dioxide gas is introduced by bubbling absorption device and the mixture reacts. The flow rate of CO₂ gas is controlled as 270ml/min till pH value of the reaction solution reaches 7.0. Solid-liquid separation is carried out, the obtained filtrate is discarded, the obtained solid is dried in the vacuum drying oven at 60°C for 24h, and sample 5^{#} of high purity barium carbonate with low strontium content and large specific surface area is obtained.

### Example 4

4000ml deionized water is added to 5000ml beaker, and the mixture is cooled with ice-water bath under stirring and the temperature is controlled as 4°C. 578.6g of high purity Ba(OH)₂·8H₂O crystal (purity is greater than 98wt%, strontium content is lower than 10ppm by weight) to be reacted is added to the mixture, the mixture is stirred for 5 minutes, and then carbon dioxide gas is introduced by bubbling absorption device and the mixture reacts. The flow rate of CO₂ gas is controlled as 300ml/min till pH value of the reaction solution reaches 7.0. Solid-liquid separation is carried out, the obtained filtrate is discarded, the obtained solid is dried in the vacuum drying oven at 60°C for 24h, and sample 6^{#} of high purity barium carbonate with low strontium content and large specific surface area is obtained.

### Example 5

4000ml deionized water is added to 5000ml beaker, and the mixture is cooled with ice-water bath under stirring and the temperature is controlled as 0°C. 1000.0g of high purity Ba(OH)₂·8H₂O crystal (purity is greater than 98wt%, strontium content is lower than 10ppm by weight) to be reacted is added to the mixture, the mixture is stirred for 3 minutes, and then carbon dioxide gas is introduced by bubbling absorption device and the mixture reacts. The flow rate of CO₂ gas is controlled as 250ml/min till pH value of the reaction solution reaches 6.0. Solid-liquid separation is carried out, the obtained filtrate is discarded, the obtained solid is dried in the vacuum drying oven at 105°C for 12h, and sample 7^{#} of high purity barium carbonate with low strontium content and large specific surface area is obtained.

### Effect assessment

Determination results of samples obtained from the examples are listed in following table.

| Serial number | Items | 3^{#} | 4^{#} | 5^{#} | 6^{#} | 7^{#} |
|---|---|---|---|---|---|---|
| 1 | BaCO₃ % (dry base) | 99.75 | 99.71 | 99.60 | 99.58 | 99.50 |
| 2 | Kppm | <10.0 | <10.0 | <10.0 | <10.0 | <10.0 |
| 3 | Na ppm | <10.0 | <10.0 | <10.0 | <10.0 | <10.0 |
| 4 | Ca ppm | <50.0 | <50.0 | <50.0 | <50.0 | <50.0 |
| 5 | Sr ppm | <20.0 | <20.0 | <20.0 | <20.0 | <20.0 |
| 6 | Fe ppm | <5.0 | <5.0 | <5.0 | <5.0 | <5.0 |
| 7 | BET m²/g | 12.41 | 14.27 | 18.55 | 24.11 | 13.46 |
| 8 | H₂O % | 0.20 | 0.24 | 0.29 | 0.33 | 0.38 |

### Methods for determination

Determination for BET specific surface area: BET nitrogen adsorption method, NOVA 1000e specific surface area analyzer, which is manufactured by America Quantachrome Instruments.

Determination for pH value: PHS-3C precision acidity meter, which is manufactured by Shanghai Precision Instruments Co., Ltd.

Determination for the content of K, Na, Ca, Sr, Fe elements by weight (ppm): Inductively coupled plasma atomic emission spectroscopy (ICP-AES), IRIS Intrepid II XSP type Inductively coupled plasma atomic emission spectrometer, which is manufactured by America Thermo Electron Corporation.

Purity of barium carbonate wt% (dry base): Method recorded in GB/T1614-1999 (industrial grade barium carbonate) is used for determination, wherein, barium carbonate is reacted with hydrochloric acid and form barium chloride, and then sulfuric acid is added to form precipitate of barium sulfate. Content of barium carbonate is calculated according to the mass of barium sulfate.

H₂Owt%: Method recorded in GB/T 6284-2006 (General method for determination of water content in chemical products), loss on drying method is used for determination.

### Analysis of results

It can be seen from forgoing comparisons that the purity of all the samples obtained in the examples of present invention are higher than 99.50wt%, impurities contents reach a rather low level, K, Na contents are all less than 10 ppm, Ca contents are all less than 50ppm, Fe contents are all less than 5ppm, and especially Sr contents are all less than 20ppm, which provide excellent materials for manufacturing multilayer ceramic chip capacitor. Moreover, wherein specific surface areas of samples 5 and 6 reach 18.55m²/g and 24.11m²/g respectively, and purity of sample 6 of barium carbonate reaches 99.58wt%, which is the most preferable solution.

## Claims

1. A method for preparing barium carbonate, **characterized in** comprising following steps:
(1) Dissolving barium hydroxide
Adding barium hydroxide octahydrate crystal into the ice-water bath and mixing them, and controlling the temperature within 0~5°C, wherein the temperature is preferably 4~5°C;
(2) Reacting barium hydroxide with carbon dioxide
Introducing carbon dioxide into the mixture obtained from the step (1), till pH value of the reaction solution reaches 6.0-7.0, preferably 6.5-7.0;
(3) Treatment for product
Carrying out solid-liquid separation for the solid-liquid mixture obtained from the step (2), drying the obtained solid so as to obtain barium carbonate product.

2. The method according to claim 1, **characterized in that**, purity of barium hydroxide octahydrate in said step (1) is greater than 98wt%, and strontium content is less than 10ppm by weight.

3. The method according to claim 1 or 2, **characterized in that**, mixing proportion of barium hydroxide octahydrate to water in said step (1) is 80-250g/1L water.

4. The method according to any of claims 1-3, **characterized in that**, flow rate of CO₂ gas in said step (2) is within the range of 250-300ml/min, preferably within the range of 270-300ml/min.

5. The method according to any of claim 4, **characterized in that**, bubbling absorption device is used to carry out the reaction in said step (2).

6. The method according to any of claims 1-5, **characterized in that**, operation of stirring the mixture for 3-10 min, preferably 5 min, is also comprised in said step (1).

7. The method according to any of claims 1-6, **characterized in that**, the drying operation in said step (3) is carried out at 60-105°C for 12-24 hours.

8. Barium carbonate product which is produced by the methods according to any of claims 1-7.

9. Barium carbonate product according to claim 8, **characterized in that**, the specific surface area is greater than 10m²/g, strontium content is lower than 20.0ppm by weight, and purity of barium carbonate is not lower than 99.50wt%.
